# EUROPÄISCHE PATENTANMELDUNG

(11) **EP 4 675 114 A1**
(43) Veröffentlichungstag der Anmeldung: **07.01.2026**
(21) Anmeldenummer: 25184480.9
(22) Anmeldetag: 23.06.2025
(51) Int. Cl.: F16B 37/08

(54) **BEFESTIGUNGSANORDNUNG, BAUTEILSTRUKTUR MIT DER BEFESTIGUNGSANORDNUNG SOWIE DAZUGEHÖRIGES BEFESTIGUNGSVERFAHREN**

(30) Priorität: 02.07.2024 DE 102024118763
(71) Anmelder: Böllhoff Verbindungstechnik GmbH, 33649 Bielefeld (DE)
(72) Erfinder: Stallmann, Thorsten, 32584 Löhne (DE); Heinrichs, Heinrich, 32602 Vlotho (DE)
(74) Vertreter: HWP Intellectual Property

(57) **Zusammenfassung**

Die vorliegende Erfindung beschreibt eine Befestigungsanordnung (1; 200) zur Befestigung eines ersten Bauteils (3) mit einer Bauteilöffnung an einem zweiten Bauteil (5) mit manuellem Ausgleich eines Abstands dazwischen. Die Befestigungsanordnung (1) umfasst ein hohlzylinderförmiges Befestigungselement (10; 50; 210) mit einem Schaftbereich (12; 212) und einem Kopfbereich (30; 230), wobei der Kopfbereich (30; 230) radial nach außen über den Schaftbereich (12; 212) mit einem umlaufenden Flansch (232) oder einer Vielzahl erster Vorsprünge (32) und einer Vielzahl zweiter Vorsprünge (34; 234) vorsteht, wobei der umlaufende Flansch (232) oder die Vielzahl erster Vorsprünge (32) und die Vielzahl zweiter Vorsprünge (34; 234) in axialer Richtung voneinander beabstandet angeordnet sind, so dass ein Rand der Bauteilöffnung im ersten Bauteil (3) zwischen dem umlaufenden Flansch (232) oder der Vielzahl erster Vorsprünge (32) und der Vielzahl zweiter Vorsprünge (34; 234) anordenbar ist und der Schaftbereich (12; 212) an seiner radialen Außenseite eine Vielzahl von Befestigungsabschnitten (14) und eine Vielzahl von Einsetzabschnitten (18) aufweist, die in umfänglicher Richtung jeweils im Wechsel angeordnet sind und sich in axialer Richtung zwischen Kopfbereich (30; 230) und einem axialen Ende des Schaftbereichs (12; 212) erstrecken, wobei die Befestigungsabschnitte (14) in radialer Richtung über die Einsetzabschnitte (18) hinausragen, eine Aufnahmeöffnung (40) des zweiten Bauteils (5), die in Umfangsrichtung im Wechsel radial in die Aufnahmeöffnung (40) vorspringende (42) und zurückspringende Bereiche (44) aufweist, so dass das Befestigungselement (10; 50; 210) durch die Bauteilöffnung im ersten Bauteil (3) in die Aufnahmeöffnung (40) einsteckbar ist und relativ zu der Aufnahmeöffnung (40) drehbar ist, wobei eine Fixierung des ersten Bauteils (3) zwischen dem umlaufenden Flansch (232) und der Vielzahl zweiter Vorsprünge (234) durch Einstecken des Befestigungselements (210) oder zwischen der Vielzahl erster (32) und zweiter Vorsprünge (34) durch Drehen des Befestigungselements (10; 50) sowie eine Fixierung des ersten Bauteils (3) am zweiten Bauteil (5) in axialer Richtung durch Drehen des Befestigungselements (10: 50; 210) bewirkt wird.

## Beschreibung

### 1. Gebiet der Erfindung

Die vorliegende Erfindung betrifft eine Befestigungsanordnung zur Befestigung eines ersten Bauteils mit einer Bauteilöffnung an einem zweiten Bauteil mit manuellem Ausgleich eines Abstands dazwischen, einer Bauteilstruktur bestehend aus zwei Bauteilen, die mittels der Befestigungsanordnung verbunden sind, sowie ein Befestigungsverfahren zum Befestigen eines ersten Bauteils mit einer Bauteilöffnung an einem zweiten Bauteil unter Verwendung der Befestigungsanordnung.

### 2. Hintergrund der Erfindung

Befestigungsanordnungen zur Befestigung eines ersten Bauteils mit einer Bauteilöffnung an einem zweiten Bauteil mit manuellem Ausgleich eines Abstands dazwischen sind im Stand der Technik in einer Vielzahl bekannt. Derartige Anordnungen werden insbesondere im Bereich der Automobilindustrie verwendet, beispielsweise um ein Anbauteil oder ein Bauteil wie einen Scheinwerfer mit der Karosserie zu verbinden. Dabei wird zwischen zwei Arten von Anordnung unterschieden, nämlichen solchen, bei denen der Abstand automatisch ausgeglichen wird und solchen, bei denen der Ausgleich manuell erfolgt.

Eine Scheinwerfer-Baugruppe mit selbsteinstellenden Befestigern ist beispielsweise in US 9,150,145 B2 beschrieben. Die Scheinwerferbaugruppe umfasst eine Strebe, einen Scheinwerfer und mehrere selbsteinstellende Befestigungselemente. Die selbsteinstellenden Befestigungselemente sind so konfiguriert, dass sie sich während der Montage des Scheinwerfers an der Halterung anpassen, um durch Fertigungsabweichungen bedingte unregelmäßige Abstände zwischen dem Scheinwerfer und der Halterung auszugleichen. Hierbei handelt es sich somit um eine Befestigungsanordnung mit automatischem Toleranzausgleich.

Aus EP 1 080 292 A1 ist eine Kofferraumdeckel-Stoßdämpferanordnung für ein Kraftfahrzeug bekannt. Der Kofferraumdeckelstoßfänger umfasst einen Bolzen mit einem Kopf und einem Schaft, wobei der Kopf zum Anstoßen an den Kofferraumdeckel geeignet ist, sowie einer Aufnahme zum Aufnehmen des Schafts des Bolzens. Die Aufnahme verfügt über Mittel zum Befestigen der Aufnahme in einem Rahmen. Zwischen dem Schaft des Bolzens und der Aufnahme ist eine Reibungsfläche vorgesehen, die ausreicht, um den Bolzen in einer gewünschten Position innerhalb der Aufnahme zu stützen. Weiterhin ist eine Verriegelung vorgesehen, um den Schaftabschnitt des Bolzens in der Aufnahme durch Drehen des Bolzenkopfs in Bezug auf die Aufnahme zu verriegeln.

Eine Abstandshalter-Anordnung ist in DE 10 2018 125 724 A1 offenbart. Die Abstandshalter-Anordnung weist ein Gehäuse auf, das ausgelegt ist, mit einer Komponente gekoppelt zu werden. Das Gehäuse weist eine zentrale Bohrung auf. Ein Stoßfänger ist mit dem Gehäuse gekoppelt. Der Stoßfänger weist einen Stoßfängerträger auf, der einen Schaft umfasst, der sich in der zentralen Bohrung erstreckt, und einen Stoßfängerkopf, der mit dem Stoßfängerträger gekoppelt ist.

Schließlich ist aus DE 10 2012 011 848 A1 eine Befestigungsanordnung zum Befestigen eines ersten Bauteils an einem zweiten Bauteil bekannt. Die Befestigungsanordnung umfasst ein zylindrisches Element mit einer äußeren Mantelfläche und ein hülsenförmiges Element mit einer inneren Mantelfläche, mittels welchen die beiden Bauteile variabel aneinander befestigbar oder befestigt sind. Weiterhin weist die Befestigungsanordnung eine Rippe auf, die bei einer der Mantelflächen des zylindrischen oder des hülsenförmigen Elements ausgebildet ist und die im Wesentlichen senkrecht zu der Achse des zylindrischen und hülsenförmigen Elements ausgerichtet ist. Ebenso ist ein Vorsprung vorgesehen, der bei der anderen der Mantelflächen des hülsenförmigen oder des zylindrischen Elements angeordnet ist. Die Rippe und der Vorsprung sind so an dem zylindrischen und hülsenförmigen Element ausgebildet, dass das hülsenförmige Element auf das zylindrische Element aufsteckbar ist und das zylindrische Element relativ zu dem ausgesteckten hülsenförmigen Element bei variablen axialen Positionen um die Achse verdrehbar ist. Bei dem Verdrehen ist die Rippe in Verbindung mit dem Vorsprung gebracht und dadurch ist das zylindrische Element relativ zu dem aufgesteckten hülsenförmigen Element in axialer Richtung fixiert.

Gerade Systeme mit einem automatischen Toleranzausgleich benötigen eine Vielzahl von unterschiedlichen Bauteilen. Denn hier beruht das Funktionsprinzip häufig darauf, dass durch das Einbringen eines Befestigungselements der Toleranzausgleich erzielt wird. Demgegenüber muss bei nicht automatischen Systemen vor dem Befestigen der Bauteile aneinander zunächst der Abstand manuell ausgeglichen werden. Erst danach wird das Befestigungselement zum Befestigen der Bauteile aneinander in die Bauteile eingebracht. Somit weisen auch Systeme mit manuellem Toleranzausgleich häufig eine Mehrzahl an verschiedenen Bauteilen auf.

Die Aufgabe der vorliegenden Erfindung ist daher, eine im Vergleich zum Stand der Technik im Hinblick auf die Handhabung optimierte Befestigungsanordnung zum manuellen Toleranzausgleich bereitzustellen, die gleichzeitig eine verlässliche Verbindung zwischen den Bauteilen realisiert.

### 3. Zusammenfassung der Erfindung

Die obige Aufgabe wird gelöst durch eine Befestigungsanordnung zur Befestigung eines ersten Bauteils mit einer Bauteilöffnung an einem zweiten Bauteil mit manuellem Ausgleich eines Abstands dazwischen gemäß dem unabhängigen Patentanspruch 1 oder gemäß dem unabhängigen Patentanspruch 2, einer Bauteilstruktur gemäß dem unabhängigen Patentanspruch 11 sowie ein Befestigungsverfahren zum Befestigen eines ersten Bauteils mit einer Bauteilöffnung an einem zweiten Bauteil gemäß dem unabhängigen Patentanspruch 14 oder gemäß dem unabhängigen Patentanspruch 15. Vorteilhafte Ausführungsformen und Weiterentwicklungen ergeben sich aus der nachfolgenden Beschreibung, den Zeichnungen sowie den anhängigen Patentansprüchen.

Eine erste Alternative einer erfindungsgemäßen Befestigungsanordnung zur Befestigung eines ersten Bauteils mit einer Bauteilöffnung an einem zweiten Bauteil mit manuellem Ausgleich eines Abstands dazwischen umfasst ein hohlzylinderförmiges Befestigungselement mit einem Schaftbereich und einem Kopfbereich, wobei der Kopfbereich radial nach außen über den Schaftbereich mit einem umlaufende Flansch oder einer Vielzahl erster Vorsprünge und einer Vielzahl zweiter Vorsprünge vorsteht, wobei der umlaufende Flansch oder die Vielzahl erster Vorsprünge und die Vielzahl zweiter Vorsprünge in axialer Richtung voneinander beabstandet angeordnet sind, so dass ein Rand der Bauteilöffnung im ersten Bauteil zwischen dem umlaufenden Flansch oder der Vielzahl erster Vorsprünge und der Vielzahl zweiter Vorsprünge anordenbar ist und der Schaftbereich an seiner radialen Außenseite eine Vielzahl von Befestigungsabschnitten und eine Vielzahl von Einsetzabschnitten aufweist, die in umfänglicher Richtung jeweils im Wechsel angeordnet sind und sich in axialer Richtung zwischen Kopfbereich und einem axialen Ende des Schaftbereichs erstrecken, wobei die Befestigungsabschnitte in radialer Richtung über die Einsetzabschnitte hinausragen, eine Aufnahmeöffnung des zweiten Bauteils, die in Umfangsrichtung im Wechsel radial in die Aufnahmeöffnung vorspringende und zurückspringende Bereiche aufweist, so dass das Befestigungselement durch die Bauteilöffnung im ersten Bauteil in die Aufnahmeöffnung einsteckbar ist und relativ zu der Aufnahmeöffnung drehbar ist, wobei eine Fixierung des ersten Bauteils zwischen dem umlaufenden Flansch und der Vielzahl zweiter Vorsprünge durch Einstecken des Befestigungselements oder zwischen der Vielzahl erster und zweiter Vorsprünge durch Drehen des Befestigungselements sowie eine Fixierung des ersten Bauteils am zweiten Bauteil in axialer Richtung durch Drehen des Befestigungselements bewirkt wird.

Zur besseren Nachvollziehbarkeit wird die Verwendung der Befestigungsanordnung nachfolgend erläutert. Ausgangspunkt ist hierbei, dass das erste und das zweite Bauteil mit einem Abstand dazwischen zueinander angeordnet sind. Dabei ist die Bauteilöffnung des ersten Bauteils mit der Aufnahmeöffnung ausgerichtet ist. Die Aufnahmeöffnung ist entweder integraler Bestandteil des zweiten Bauteils oder eines dritten Bauteils, das an dem zweiten Bauteil angeordnet ist. Beispielsweise ist das dritte Bauteil auf einen Rand des zweiten Bauteils seitlich aufgeschoben und/oder an dem zweiten Bauteil verliersicher befestigt. Dies wird später detailliert erläutert.

Ausgehend von den so zueinander ausgerichteten Bauteilen wird das Befestigungselement durch die Bauteilöffnung des ersten Bauteils mit dem Schaftbereich voran eingesetzt. Bei dem Befestigungselement mit der Vielzahl erster und zweiter Vorsprünge wird die Vielzahl erster Vorsprünge durch die benachbart zum Kopf vorhandenen Vorsprünge gebildet, während die axial davon in Richtung des Schaftendes beabstandeten Vorsprünge die zweite Vielzahl an Vorsprüngen bildet. In der Ausführungsform mit der Vielzahl erster und zweiter Vorsprünge sind diese vorteilhafterweise in umfänglicher Richtung versetzt zueinander angeordnet. Zudem ist die Bauteilöffnung vorzugsweise komplementär zu der Form der Vielzahl zweiter Vorsprünge ausgestaltet. Bei zwei zweiten Vorsprüngen, die um 180° voneinander beabstandet sind, liegt die Bauteilöffnung daher in Form eines Schlüssellochs vor.

Bei dem Befestigungselement mit dem umlaufenden Flansch und der Vielzahl zweiter Vorsprünge ist der umlaufende Flansch benachbart zum Kopf vorhanden, während die axial davon in Richtung des Schaftendes beabstandeten Vorsprünge, vorzugsweise Rastnasen, die zweite Vielzahl an Vorsprüngen bildet.

Bei dem Einsetzen des Befestigungselements mit der Vielzahl erster und zweiter Vorsprünge in die Bauteilöffnung des ersten Bauteils passiert die Vielzahl zweiter Vorsprünge die Bauteilöffnung. Die Vielzahl erster Vorsprünge, die vorzugsweise umfänglich versetzt zu der Vielzahl zweiter Vorsprünge angeordnet ist, liegt an der Bauteiloberfläche an. Beispielsweise sind zwei erste Vorsprünge vorhanden, die einander gegenüber liegend vorgesehen sind und bezogen auf die zweiten Vorsprünge um 90° versetzt dazu angeordnet sind.

Im Hinblick auf die Aufnahmeöffnung erfolgt das Einsetzen so, dass die Einsetzabschnitte mit den vorspringenden Bereichen der Aufnahmeöffnung ausgerichtet sind. Somit ist eine Bewegbarkeit des Befestigungselements in der Aufnahmeöffnung in axialer Richtung problemlos möglich. Hierdurch kann der gewünschte Abstand zwischen den beiden Bauteilen berücksichtigt werden.

Sobald das Befestigungselement mit der Vielzahl erster Vorsprünge an der Oberfläche des ersten Bauteils anliegt, erfolgt ein Drehen des Befestigungselements. Hierdurch wird die Vielzahl zweiter Vorsprünge von den Aussparungen in der Bauteilöffnung wegbewegt und gelangt mit der Bauteiloberfläche an einer zweiten Seite in Eingriff. Die Vielzahl erster Vorsprünge bleibt weiterhin mit der Bauteiloberfläche in Kontakt, jedoch auf der gegenüberliegenden ersten Seite. Somit wird das erste Bauteil zwischen der Vielzahl erster und zweiter Vorsprünge fixiert. Ein Abstand zwischen der Vielzahl erster und zweiter Vorsprünge in axialer Richtung ist daher auf eine Dicke des ersten Bauteils im Befestigungsbereich angepasst.

Eine solche Drehung des Befestigungselements bewirkt zudem, dass die Befestigungsabschnitte mit den vorspringenden Bereichen der Aufnahmeöffnung in Eingriff gelangen. Hierdurch findet somit eine Fixierung in axialer Richtung statt.

Sobald dies erfolgt ist, sind die beiden Bauteile in einem Abstand zueinander befestigt, wobei das erste Bauteil fest zwischen der Vielzahl erster und der Vielzahl zweiter Vorsprünge im Kopfbereich des Befestigungselements angeordnet ist. Das zweite Bauteil befindet sich in dem gewünschten definierten Abstand.

Bei dem Einsetzen des Befestigungselements mit dem umlaufenden Flansch und der Vielzahl zweiter Vorsprünge in die Bauteilöffnung des ersten Bauteils passiert die Vielzahl zweiter Vorsprünge die Bauteilöffnung. Der umlaufende Flansch liegt danach an der Bauteiloberfläche an. Wie oben erläutert erfolgt auch hier das Einsetzen im Hinblick auf die Aufnahmeöffnung so, dass die Einsetzabschnitte mit den vorspringenden Bereichen der Aufnahmeöffnung ausgerichtet sind. Somit ist eine Bewegbarkeit des Befestigungselements in der Aufnahmeöffnung in axialer Richtung problemlos möglich und der gewünschte Abstand zwischen den beiden Bauteilen kann berücksichtigt werden.

Anders als in der obigen Ausführungsform mit der Vielzahl erster und zweiter Vorsprünge bewirkt bei der Kombination aus dem umlaufenden Flansch und der Vielzahl zweiter Vorsprünge, bei denen es sich vorzugsweise um Rastnasen handelt, bereits ein Einsetzen des Befestigungselements in die Bauteilöffnung eine Fixierung des ersten Bauteils zwischen dem umlaufenden Flansch und der Vielzahl zweiter Vorsprünge. Ein Abstand zwischen dem umlaufenden Flansch und der Vielzahl zweiter Vorsprünge in axialer Richtung ist daher auf eine Dicke des ersten Bauteils im Befestigungsbereich angepasst.

Wie in der vorherigen Ausführungsform bewirkt auch hier eine Drehung des Befestigungselements, dass die Befestigungsabschnitte mit den vorspringenden Bereichen der Aufnahmeöffnung in Eingriff gelangen. Hierdurch findet somit eine Fixierung in axialer Richtung statt.

Sobald dies erfolgt ist, sind die beiden Bauteile in einem Abstand zueinander befestigt, wobei das erste Bauteil fest zwischen dem umlaufenden Flansch und der Vielzahl zweiter Vorsprünge im Kopfbereich des Befestigungselements angeordnet ist. Das zweite Bauteil befindet sich in dem gewünschten definierten Abstand.

Ein Vorteil dieser Vorgehensweise ist, dass kein zusätzliches Befestigungsmittel verwendet werden muss. Vorzugsweise entfällt daher die Notwendigkeit der Verwendung einer Schraube zur Sicherung und Befestigung der Bauteile aneinander.

Zudem stellt die Anordnung weiterhin eine robuste und einfach anzuwendende Befestigungsanordnung bereit, die günstig herzustellen ist und nicht aus mehreren Teilen, sondern lediglich aus den zwei Elementen besteht.

Eine entsprechende Verriegelung erfolgt in Abhängigkeit von der Anzahl der Vorsprünge und/oder der Befestigungsabschnitte durch eine Drehung beispielsweise um 30° oder 60°, wobei auch andere Drehwinkel bevorzugt sind, die insbesondere zwischen 30° und 60° liegen, wie beispielsweise 45°. Eine Drehung um 45° zur Verriegelung des Befestigungselements in der Aufnahmeöffnung kann beispielsweise bei dem oben aufgeführten Beispiel mit zwei ersten und zwei zweiten Vorsprüngen genutzt werden. Dies gilt analog für die Fixierung in axialer Richtung bei der Verwendung von zwei Befestigungsabschnitten.

Eine zweite Alternative einer erfindungsgemäßen Befestigungsanordnung zur Befestigung eines ersten Bauteils mit einer Bauteilöffnung an einem zweiten Bauteil mit manuellem Ausgleich eines Abstands dazwischen umfasst ein hohlzylinderförmiges Befestigungselement mit einem Schaftbereich und einem Kopfbereich, wobei der Kopfbereich radial nach außen über den Schaftbereich mit einer Vielzahl erster und zweiter Vorsprünge vorsteht, wobei die Vielzahl erster und zweiter Vorsprünge in axialer Richtung voneinander beabstandet und in umfänglicher Richtung versetzt zueinander angeordnet sind, so dass ein Rand der Bauteilöffnung im ersten Bauteil zwischen der Vielzahl erster und zweiter Vorsprünge anordenbar ist und der Schaftbereich an seiner radialen Innenseite in Umfangsrichtung im Wechsel radial in einen Innenraum vorspringende und zurückspringende Bereiche aufweist, ein Sicherungselement, das einen sich senkrecht von einer Oberfläche des zweiten Bauteils erstreckenden Vorsprung bereitstellt, wobei der Vorsprung an seiner radialen Außenseite eine Vielzahl von Befestigungsabschnitten und eine Vielzahl von Einsetzabschnitten aufweist, die in umfänglicher Richtung jeweils im Wechsel angeordnet sind und sich in axialer Richtung zwischen dem zweiten Bauteil und einem axialen Ende des Sicherungselements erstrecken, wobei die Befestigungsabschnitte in radialer Richtung weiter vorstehen als die Einsetzabschnitte, so dass das Befestigungselement durch eine Bauteilöffnung im ersten Bauteil auf das Sicherungselement steckbar und relativ zu dem Sicherungselement drehbar ist, wobei eine Drehung des Befestigungselements eine Fixierung des ersten Bauteils zwischen der Vielzahl erster und zweiter Vorsprünge sowie eine Fixierung des ersten Bauteils am zweiten Bauteil in axialer Richtung bewirkt.

Die Funktionsweise der zweiten Alternative der erfindungsgemäßen Befestigungsanordnung ähnelt der der ersten Alternative. Im Gegensatz zur ersten Alternative ist am zweiten Bauteil jedoch keine Aufnahmeöffnung, sondern ein Sicherungselement vorgesehen. Dieses stellt am zweiten Bauteil einen sich senkrecht von der Oberfläche des zweiten Bauteils ersteckenden Vorsprung bereit. Der Vorsprung weist eine Ausgestaltung analog zu dem Schaftbereich der ersten Alternative der Befestigungsanordnung auf. Dementsprechend weist das Befestigungselement der zweiten Alternative im Inneren eine Ausgestaltung analog zur Aufnahmeöffnung der ersten Alternative der Befestigungsanordnung auf.

Zur Erläuterung der sich daraus ergebende Funktionsweise wird wieder davon ausgegangen, dass das erste und das zweite Bauteil mit einem Abstand dazwischen zueinander angeordnet sind. Die Bauteilöffnung des ersten Bauteils ist mit dem Sicherungselement ausgerichtet ist. Das Sicherungselement ist entweder integraler Bestandteil des zweiten Bauteils oder wird durch ein drittes Bauteil bereitgestellt, das am zweiten Bauteil angeordnet oder befestigt ist.

Ausgehend von den so zueinander ausgerichteten Bauteilen wird das Befestigungselement durch die Bauteilöffnung des ersten Bauteils mit dem Schaftbereich voran eingesetzt. Die Vielzahl erster Vorsprünge wird durch die benachbart zum Kopf vorhandenen Vorsprünge gebildet, während die axial davon in Richtung des Schaftendes beabstandeten Vorsprünge die zweite Vielzahl an Vorsprüngen bildet. Die Bauteilöffnung ist vorzugsweise komplementär zu der Form der Vielzahl zweiter Vorsprünge ausgestaltet. Bei zwei zweiten Vorsprüngen, die um 180° voneinander beabstandet sind, liegt die Bauteilöffnung daher in Form eines Schlüssellochs vor.

Bei dem Einsetzen des Befestigungselements in die Bauteilöffnung des ersten Bauteils passiert die Vielzahl zweiter Vorsprünge die Bauteilöffnung, wobei die Vielzahl erster Vorsprünge, die umfänglich versetzt zu der Vielzahl zweiter Vorsprünge angeordnet ist, an der Bauteiloberfläche anliegt. Die Einsetzabschnitte des Sicherungselements sind mit den vorspringenden Bereichen des Schaftbereichs ausgerichtet. Somit ist eine Bewegbarkeit des Befestigungselements bezogen auf das Sicherungselement in axialer Richtung problemlos möglich. Wie in der vorherigen Alternative kann hierdurch der gewünschte Abstand zwischen den beiden Bauteilen berücksichtigt werden.

Sobald das Befestigungselement mit der Vielzahl erster Vorsprünge an der Oberfläche des ersten Bauteils anliegt, erfolgt ein Drehen des Befestigungselements. Hierdurch wird die Vielzahl zweiter Vorsprünge von den Aussparungen in der Bauteilöffnung wegbewegt und gelangt mit der Bauteiloberfläche an einer zweiten Seite in Eingriff. Die Vielzahl erster Vorsprünge bleibt weiterhin mit der Bauteiloberfläche in Kontakt, jedoch auf der gegenüberliegenden ersten Seite. Somit wird das erste Bauteil zwischen der Vielzahl erster und zweiter Vorsprünge fixiert. Ein Abstand zwischen der Vielzahl erster und zweiter Vorsprünge in axialer Richtung ist daher auf eine Dicke des ersten Bauteils im Befestigungsbereich angepasst.

Eine solche Drehung des Befestigungselements bewirkt zudem, dass die vorspringenden Bereiche des Befestigungselements mit den Befestigungsabschnitten des Sicherungselement in Eingriff gelangen. Hierdurch findet somit eine Fixierung in axialer Richtung statt.

Sobald dies erfolgt ist, sind die beiden Bauteile in einem Abstand zueinander befestigt, wobei das erste Bauteil fest zwischen der Vielzahl erster und der Vielzahl zweiter Vorsprünge im Kopfbereich des Befestigungselements angeordnet ist. Das zweite Bauteil befindet sich in dem gewünschten definierten Abstand.

Die sich daraus ergebenden Vorteile entsprechen den oben für die erste Alternative diskutierten Vorteilen. Aus Übersichtlichkeitsgründen wird daher auf die obigen Ausführungen verwiesen.

In einer bevorzugten Ausführungsform der Befestigungsanordnung weist mindestens ein Einsetzabschnitt benachbart zu einem Befestigungsabschnitt einen axial verlaufenden Steg auf, der radial von dem Einsetzabschnitt vorsteht und einen Anschlag zur Begrenzung der Drehung des Befestigungselements für den entsprechenden vorspringenden Bereich bereitstellt. Mithilfe des axial verlaufenden Stegs wird ein Überdrehen des Befestigungselements verhindert.

Weiterhin ist es bevorzugt, dass jeder Befestigungsabschnitt eine Vielzahl von Zähnen aufweist. Vorteilhafterweise verjüngen sich die Zähne in Festdrehrichtung des Befestigungselements und/oder ihre radiale Erstreckung reduziert sich. Durch diese Ausgestaltung ist die Befestigungsanordnung in unterschiedlichen Axialpositionen fixierbar, insbesondere in Abhängigkeit von der axialen Länge des Schaftbereichs des Befestigungselements. Zudem wird, unter Berücksichtigung der im Laufe der Zeit erfolgende Relaxation des Kunststoffs als Material für die Aufnahmeöffnung oder das Befestigungselement, wenn dieses die vorspringenden und zurückspringenden Bereiche aufweist, eine Rückdrehsicherung im Bereich der abfallenden Flanke des jeweiligen Zahns ausgebildet.

In einer weiteren vorteilhaften Ausführungsform der Befestigungsanordnung mit den Zähnen verlaufen die Zähne senkrecht zu einer durch den Schaftbereich des Befestigungselements definierten Längsachse oder senkrecht zu einer durch den Vorsprung des Sicherungselements definierten Längsachse oder zwei benachbarte Zähne sind spiegelsymmetrisch bezogen auf eine Ebene zwischen den Zähnen, die senkrecht zur Längsachse ausgerichtet ist, angeordnet, wobei die benachbarten Zähne einen Winkel von 1°, vorzugsweise 2° und besonders bevorzugt 3°, mit der Ebene einschließen. Gerade die sich senkrecht erstreckenden Zähne weisen den Vorteil auf, dass kein Eintrag von zusätzlichen Axialkräften zwischen den zu verbindenden Bauteilen vorliegt. Demgegenüber hat die Ausführungsform mit den Zähnen spiegelsymmetrisch bezogen auf die Ebene zwischen den Zähnen den Vorteil, dass eine zusätzliche Ausdrehsicherung geschaffen wird. Dies ist erneut in dem Relaxationsverhalten des Kunststoffs als Material für den Bereich mit der Aufnahmeöffnung oder für das Befestigungselement bei Verwendung eines Sicherungselements begründet.

In einer bevorzugten Ausführungsform der Befestigungsanordnung weist das Befestigungselement im Kopfbereich ein Antriebsmerkmal auf. Über das jeweilige Antriebsmerkmal wird das Befestigungselement im ersten Bauteil verriegelt. Somit ermöglicht das Antriebsmerkmal eine Drehung des Befestigungselements. Hierzu kann das Antriebsmerkmal ein inneres oder ein äußeres Antriebsmerkmal sein, wie beispielsweise ein Innensechskant oder ein Außensechskant. Bevorzugt ist gerade im Hinblick auf die erste Alternative ein inneres Antriebsmerkmal, während im Hinblick auf die zweite Alternative sowohl ein inneres wie auch ein äußeres Antriebsmerkmal bevorzugt ist.

Vorzugsweise ist der umlaufende Flansch oder die Vielzahl erster Vorsprünge benachbart zu einem ersten axialen Ende des Befestigungselements vorhanden und die Vielzahl zweiter Vorsprünge weist auf einer dem umlaufenden Flansch oder der Vielzahl erster Vorsprünge zugewandten Fläche mindestens eine Rippe auf. Die Rippe unterstützt die Befestigung des ersten Bauteils im Kopfbereich zusätzlich. Ergänzend kann die Vielzahl zweiter Vorsprünge zudem eine Auflaufschräge aufweisen, um das Festdrehen des Befestigungselements und den Halt des ersten Bauteils zwischen den ersten und den zweiten Vorsprüngen zu unterstützen.

In Verbindung mit der ersten Alternative der erfindungsgemäßen Befestigungsanordnung ist es bevorzugt, dass das Befestigungselement aus einem Material besteht, das härter ist als das Material, in dem die Aufnahmeöffnung ausgebildet ist. Auf diese Weise insbesondere sichergestellt, dass sich die Zähne in das weichere Material eingraben können und so die Fixierung in axialer Richtung besonders verlässlich erfolgt. Ein weiterer sich hieraus ergebender Vorteil ist, gerade wenn die Aufnahmeöffnung durch ein separates drittes Bauteil bereitgestellt wird, dass sich das verformende weichere Element bei eventuell fehlerhafter oder erneuter Abstandseinstellung leichter und besser austauschen lässt. Als Material für das Befestigungselement kommt in diesem Fall beispielsweise PPA-GF50 in Betracht. Die Aufnahmeöffnung sollte daher in einem weicheren Material, vorzugsweise einem weicheren Kunststoff, gebildet sein.

Schließlich ist es in Verbindung mit der zweiten Alternative der erfindungsgemäßen Befestigungsanordnung bevorzugt, dass das Sicherungselement aus einem Material besteht, das härter ist als das Material des Befestigungselements. Hieraus ergeben sich in analoger Weise die gerade beschriebenen Vorteile auch für die zweite Alternative. In diesem Fall kommt daher beispielsweise PPA-GF50 als Material für das Sicherungselement in Betracht, während für das Befestigungselement ein weicheres Material, insbesondere ein weicherer Kunstsoff, verwendet wird.

Eine erfindungsgemäße Bauteilstruktur besteht aus einem ersten Bauteil mit Bauteilöffnung und einem zweiten Bauteil, wobei das erste und das zweite Bauteil mit einem Abstand zueinander mittels der erfindungsgemäßen Befestigungsanordnung miteinander verbunden sind. In der erfindungsgemäßen Bauteilstruktur wird zu Befestigung der Bauteile aneinander somit die erfindungsgemäße Befestigungsanordnung verwendet. Im Hinblick auf die sich daraus ergebenden Vorteile wird zur Vermeidung von Wiederholungen auf die obigen Ausführungen verwiesen.

In einer bevorzugten Ausführungsform der Bauteilstruktur ist die Befestigungsanordnung eine Befestigungsanordnung in Verbindung mit der ersten Alternative der erfindungsgemäßen Befestigungsanordnung und die Aufnahmeöffnung ist integraler Bestandteil des zweiten Bauteils oder eines separaten dritten Bauteils, das an dem zweiten Bauteil angeordnet ist, vorzugsweise auf einen Rand des zweiten Bauteils seitlich aufgeschoben und/oder in dem zweiten Bauteil verliersicher befestigt ist. Die integrale Ausgestaltung vermeidet die Notwendigkeit weiterer Bauteile, was die Verwendung vereinfacht. Die Bereitstellung über ein separates drittes Bauteil ermöglicht demgegenüber eine höhere Flexibilität, da das dritte Bauteil bei Bedarf ersetzbar und an die jeweiligen Einsatzbedingungen anpassbar ist.

In einer anderen bevorzugten Ausführungsform der Bauteilstruktur ist die Befestigungsanordnung eine Befestigungsanordnung in Verbindung mit der zweiten Alternative der erfindungsgemäßen Befestigungsanordnung und das Sicherungselement ist integraler Bestandteil des zweiten Bauteils oder das Sicherungselement ist ein separates drittes Bauteil, das an dem zweiten Bauteil befestigt ist. Bezüglich der Vorteile der integralen oder separaten Ausgestaltung des Sicherungselements wird auf die vorherige Ausführungsform und die Bereitstellung der Aufnahmeöffnung verwiesen, um Wiederholungen zu vermeiden.

Ein erste Alternative eines erfindungsgemäßen Befestigungsverfahrens zum Befestigen eines ersten Bauteils mit einer Bauteilöffnung an einem zweiten Bauteil unter Verwendung der ersten Alternative der erfindungsgemäßen Befestigungsanordnung weist die Schritte auf: Anordnen des ersten Bauteils in einem gewünschten Abstand zum zweiten Bauteil, wobei die Bauteilöffnung des ersten Bauteils mit der Aufnahmeöffnung des zweiten Bauteils ausgerichtet ist, Einsetzen des Befestigungselements in die Bauteilöffnung des ersten Bauteils, bis der umlaufende Flansch oder die Vielzahl erster Vorsprünge am ersten Bauteil anliegt und der Schaftbereich mit der Aufnahmeöffnung des zweiten Bauteils in Eingriff gelangt, wobei die Einsetzabschnitte mit den vorspringenden Bereichen und die Befestigungsabschnitte mit den zurückspringenden Bereichen ausgerichtet sind, danach Drehen des Befestigungselements, wodurch eine Fixierung des ersten Bauteils am zweiten Bauteil in axialer Richtung bewirkt wird. Mit dem Befestigungsverfahren wird eine erfindungsgemäße Bauteilstruktur realisiert. Bei Verwendung der Ausführungsform des Befestigungselements mit dem umlaufenden Flansch und der Vielzahl zweiter Vorsprünge, vorzugsweise einer Vielzahl Rastnasen, bewirkt bereits das Einsetzen des Befestigungselements in die Bauteilöffnung des ersten Bauteils eine Fixierung des ersten Bauteils zwischen dem umlaufenden Flansch und der Vielzahl zweiter Vorsprünge. Wird die Ausführungsform des Befestigungselements mit der Vielzahl erster und zweiter Vorsprünge verwendet, dann bewirkt das Drehen nach dem Einsetzen des Befestigungselements in die Bauteilöffnung im ersten Bauteil nicht nur eine Fixierung des ersten Bauteils am zweiten Bauteil in axialer Richtung, sondern zusätzlich eine Fixierung des ersten Bauteils zwischen der Vielzahl erster und zweiter Vorsprünge. Bezüglich der sich ergebenden technischen Effekte und Vorteile wird auf die obigen Ausführungen zur ersten Alternative einer erfindungsgemäßen Befestigungsanordnung verwiesen.

Eine zweite Alternative eines erfindungsgemäßen Befestigungsverfahrens zum Befestigen eines ersten Bauteils mit einer Bauteilöffnung an einem zweiten Bauteil unter Verwendung einer zweiten Alternative einer erfindungsgemäßen Befestigungsanordnung weist die Schritte auf: Anordnen des ersten Bauteils in einem gewünschten Abstand zum zweiten Bauteil, wobei die Bauteilöffnung des ersten Bauteils mit dem Sicherungselement ausgerichtet ist, Einsetzen des Befestigungselements in die Bauteilöffnung des ersten Bauteils, bis die Vielzahl erster Vorsprünge am ersten Bauteil anliegt und der Schaftbereich mit dem Sicherungselement in Eingriff gelangt, wobei die vorspringenden Bereiche mit den Einsetzabschnitten des Sicherungselements und die zurückspringenden Bereiche mit den Befestigungsabschnitten des Sicherungselements ausgerichtet sind, danach Drehen des Befestigungselements, wodurch eine Fixierung des ersten Bauteils zwischen der Vielzahl erster und zweiter Vorsprünge sowie eine Fixierung des ersten Bauteils am zweiten Bauteil in axialer Richtung bewirkt wird. Auch mit dem Befestigungsverfahren wird eine erfindungsgemäße Bauteilstruktur realisiert, allerdings unter Verwendung der zweiten Alternative der erfindungsgemäßen Befestigungsanordnung. Somit wird bezüglich der sich ergebenden technischen Effekte und Vorteile auf die obigen Ausführungen zur zweiten Alternative der erfindungsgemäßen Befestigungsanordnung verwiesen.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine perspektivische Ansicht einer Bauteilstruktur mit einer ersten Alternative einer Ausführungsform einer erfindungsgemäßen Befestigungsanordnung im Teilschnitt in einem nicht befestigten Zustand,
- Figur 2: eine Draufsicht auf die Bauteilstruktur gemäß Fig. 1,
- Figur 3: eine Schnittansicht der Bauteilstruktur gemäß Fig. 1,
- Figur 4: eine perspektivische Ansicht der Bauteilstruktur mit der ersten Alternative einer Ausführungsform der erfindungsgemäßen Befestigungsanordnung im Teilschnitt in einem befestigten Zustand,
- Figur 5: eine Draufsicht auf die Bauteilstruktur gemäß Fig. 4,
- Figur 6: eine Schnittansicht der Bauteilstruktur gemäß Fig. 4,
- Figur 7: eine Teilschnittansicht der Bauteilstruktur gemäß Fig. 4,
- Figur 8: eine Teilschnittansicht der Bauteilstruktur gemäß Fig. 4,
- Figur 9: eine Seitenansicht einer weiteren Ausführungsform eines Befestigungselements,
- Figur 10: eine perspektivische Ansicht einer Bauteilstruktur mit einer zweiten Alternative einer Ausführungsform einer erfindungsgemäßen Befestigungsanordnung im Teilschnitt in einem nicht befestigten Zustand,
- Figur 11: eine Draufsicht auf die Bauteilstruktur gemäß Fig. 10,
- Figur 12: eine Schnittansicht der Bauteilstruktur gemäß Fig. 10,
- Figur 13: eine perspektivische Ansicht der Bauteilstruktur mit der zweiten Alternative einer Ausführungsform der erfindungsgemäßen Befestigungsanordnung im Teilschnitt in einem befestigten Zustand,
- Figur 14: eine Draufsicht auf die Bauteilstruktur gemäß Fig. 13,
- Figur 15: eine Schnittansicht der Bauteilstruktur gemäß Fig. 13,
- Figur 16: eine Teilschnittansicht der Bauteilstruktur gemäß Fig. 13,
- Figur 17: eine perspektivische Ansicht einer Bauteilstruktur mit einer anderen Ausführungsform der ersten Alternative der erfindungsgemäßen Befestigungsanordnung im Schnitt in einem nicht befestigten Zustand,
- Figur 18: ein schematisches Flussdiagramm einer Ausführungsform einer ersten Alternative eines erfindungsgemäßen Befestigungsverfahrens und
- Figur 19: ein schematisches Flussdiagramm einer Ausführungsform einer zweiten Alternative eines erfindungsgemäßen Befestigungsverfahrens.

### 5. Detaillierte Beschreibung der bevorzugten Ausführungsformen

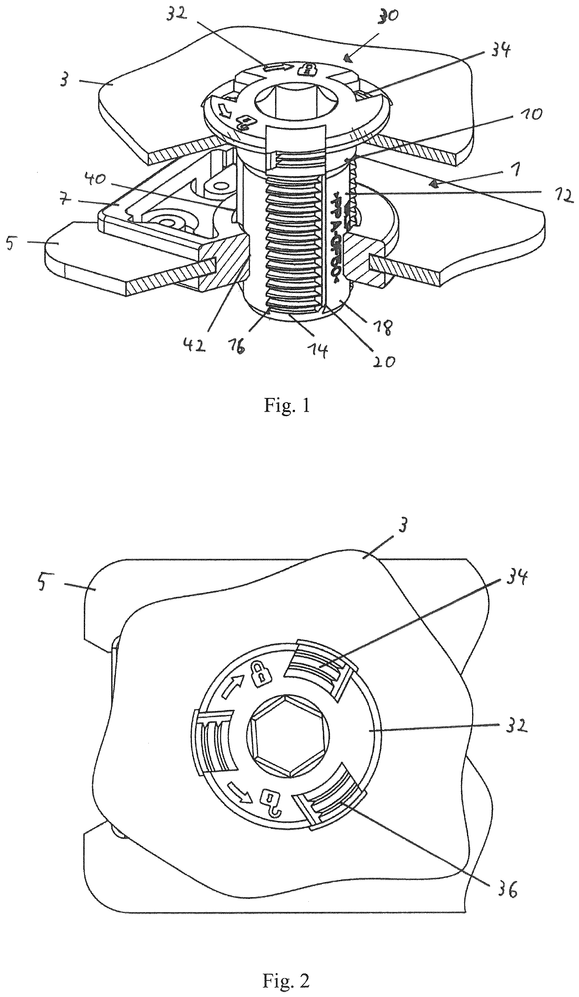

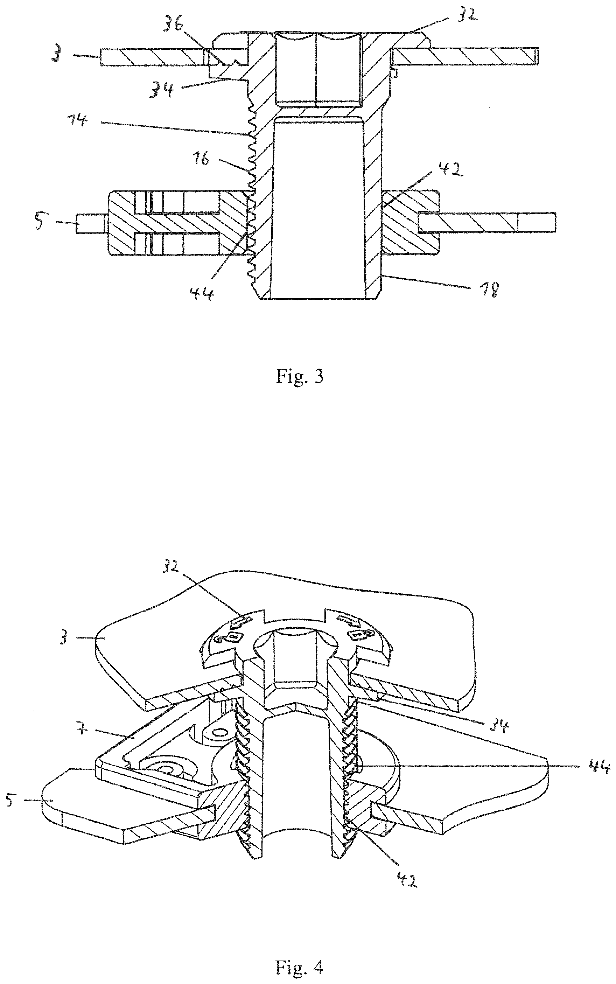

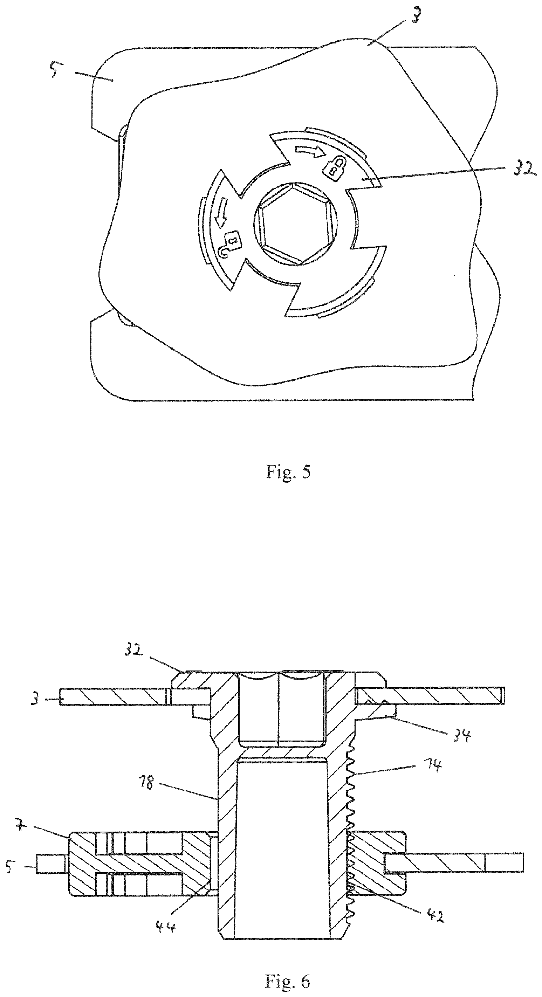

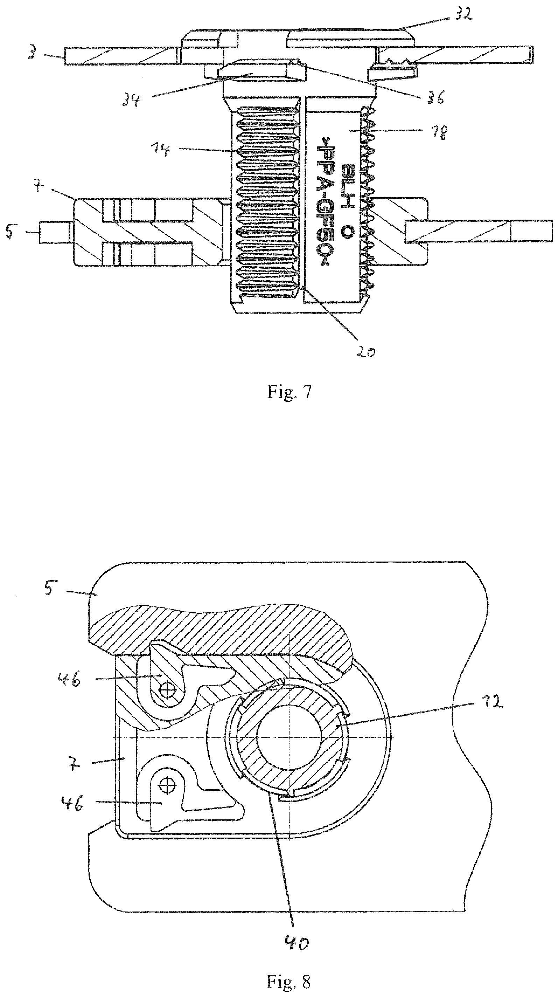

Nachfolgend wird eine Ausführungsform einer ersten Alternative einer erfindungsgemäßen Befestigungsanordnung 1 unter Bezugnahme auf die Verwendung in einer Bauteilstruktur erläutert. Dies erfolgt insbesondere unter Bezugnahme auf die Figuren 1 bis 8. Während die Figuren 1 bis 3 die Befestigungsanordnung 1 in einem in ein erstes Bauteil 3 und ein zweites Bauteil 5 eingesetzten aber nicht darin befestigten Zustand zeigen, zeigen die Figuren 4 bis 7 die Befestigungsanordnung 1 in einem befestigten Zustand. Figur 8 dient zur Verdeutlichung des Aufbaus bei einer Bereitstellung einer Aufnahmeöffnung 40 durch ein drittes Bauteil 7.

Die Befestigungsanordnung 1 besteht aus einem hohlzylinderförmigen Befestigungselement 10 sowie einer Aufnahmeöffnung 40 des zweiten Bauteils 5.

Das Befestigungselement 10 umfasst einen Schaftbereich 12 und einen Kopfbereich 30. Der Kopfbereich weist radial nach außen über den Schaftbereich 12 vorstehende erste 32 und zweite Vorsprünge 34 auf. In der dargestellten Ausführungsform sind drei erste Vorsprünge 32 und drei zweite Vorsprünge 34 vorgesehen. Die ersten 32 sowie die zweiten Vorsprünge 34 sind umfänglich gleichmäßig voneinander beabstandet. Bezogen auf einen geometrischen Mittelpunkt jedes ersten Vorsprungs sind diese in umfänglicher Richtung um 120° beabstandet. Gleiches gilt analog für die zweiten Vorsprünge 34.

Die zweiten Vorsprünge 34 sind axial von den ersten Vorsprüngen 32 in Richtung des Schaftendes beabstandet. Ein Abstand in axialer Richtung zwischen den ersten Vorsprüngen 32 und den zweiten Vorsprüngen 34 entspricht vorzugsweise einer Dicke des ersten Bauteils 3 im Befestigungsbereich.

Neben diesem axialen Abstand der ersten 32 und zweiten Vorsprüngen 34 sind die ersten 32 und zweiten Vorsprünge 34 ebenfalls umfänglich versetzt zueinander angeordnet. Wie anhand von Figur 2 erkennbar, wechseln sich die ersten 32 und zweiten Vorsprünge 34 in umfänglicher Richtung ab.

Eine Bauteilöffnung im ersten Bauteil 3 weist eine Form auf, die komplementär zur Form der zweiten Vorsprünge 34 ausgebildet ist. Somit weist die Bauteilöffnung drei Aussparungen auf, deren geometrische Mittelpunkte um 120° zueinander versetzt angeordnet sind. Auf diese Weise kann das Befestigungselement 10 in die Bauteilöffnung des ersten Bauteils eingesetzt werden, bis die ersten Vorsprünge 32 auf der Oberfläche des ersten Bauteils 3 benachbart zur Bauteilöffnung aufliegen.

Wie insbesondere anhand von Figur 2 erkennbar, weist die Vielzahl zweiter Vorsprünge 34 auf einer der Vielzahl erster Vorsprünge 32 zugewandten Seite mindestens eine Rippe 36 auf. In der vorliegenden Ausführungsform sind zwei Rippen 36 vorgesehen. Hierdurch kann die Befestigung des ersten Bauteils 3 zwischen den ersten 32 und zweiten Vorsprüngen 34 weiter verbessert werden. In diesem Zusammenhang ist es ebenfalls bevorzugt, dass die zweiten Vorsprünge 34 eine Auflaufschräge aufweisen, wie dies beispielsweise in Figur 7 gezeigt ist.

Der Schaftbereich 12 besteht in umfänglicher Richtung wechselweise aus einem Befestigungsabschnitt 14 und einem Einsetzabschnitt 18. Bezogen auf den Befestigungsabschnitt 14 ist der Einsetzabschnitt 18 radial nach innen versetzt und vorzugsweise glatt ausgebildet. Die Befestigungsabschnitte 14 sind in axialer Richtung mit den zweiten Vorsprüngen 34 ausgerichtet, während die Einsetzabschnitte 18 mit den ersten Vorsprüngen 32 ausgerichtet sind. In umfänglicher Richtung weisen die Befestigungsabschnitte 14 daher eine Erstreckung auf, die der umfänglichen Erstreckung der zweiten Vorsprünge 34 entspricht. Gleiches gilt analog für die Einsetzabschnitte 18 im Hinblick auf die ersten Vorsprünge 32.

Der Einsetzabschnitt 18 weist benachbart zu dem Befestigungsabschnitt 14 einen axial verlaufenden Steg 20 auf. Dieser steht radial von dem Einsetzabschnitt 18 vor und stellt einen Anschlag zur Begrenzung der Drehung des Befestigungselements 10 bereit. Daher ist der Steg 20 in Festdrehrichtung des Befestigungselements 10 hinter dem Befestigungsabschnitt 14 angeordnet.

Der Befestigungsabschnitt 14 weist eine Vielzahl Zähne 16 auf. In der dargestellten Ausführungsform verlaufen die Zähne 16 senkrecht zu einer durch den Schaftbereich 12 des Befestigungselements 10 definierten Längsachse. Hierdurch ist eine Befestigung des ersten 3 und zweiten Bauteils 5 aneinander ohne den Eintrag von Axialkräften in die Befestigungsanordnung 1 realisierbar.

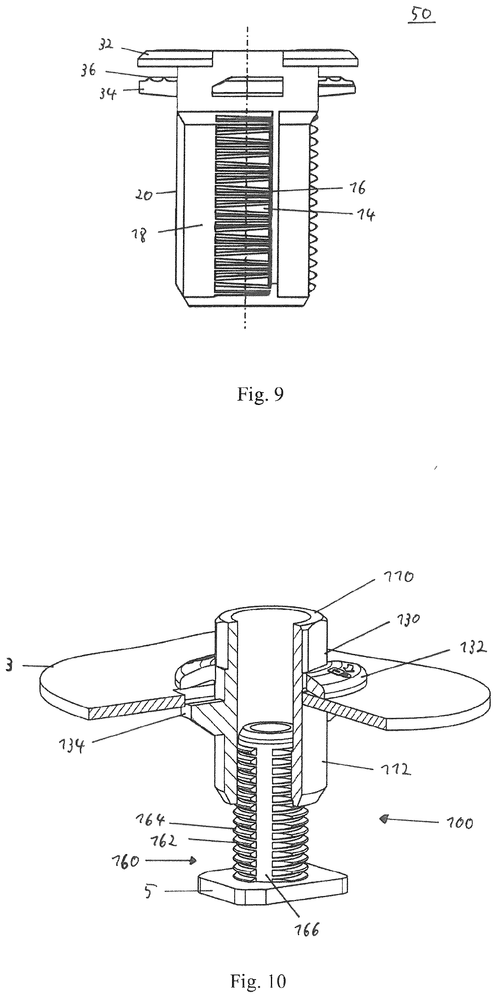

Alternativ zeigt Figur 9 ein anderes ausgestaltetet Befestigungselement 50. Bei diesem Befestigungselement 50 sind zwei benachbarte Zähne 16 spiegelsymmetrisch bezogen auf eine Ebene zwischen den Zähnen 16 angeordnet, die senkrecht zur Längsachse ausgerichtet ist. Die benachbarten Zähne schließen dabei einen Winkel von 1°, vorzugsweise 2° und besonders bevorzugt 3° mit der jeweiligen Ebene ein. Auf diese Weise wird eine Rückdrehsicherung gebildet, wodurch das Befestigungselement 50 besonders verlässlich in der Aufnahmeöffnung 40 gehalten wird. Im Übrigen entspricht das Befestigungselement 50 dem Befestigungselement 10.

Um eine Rückdrehsicherung bereitzustellen, verjüngen sich die Zähne 16 in Festdrehrichtung des Befestigungselements 10. Alternativ oder zusätzlich reduziert sich die radiale Erstreckung der Zähne 16 in Festdrehrichtung, was ebenfalls eine Rückdrehsicherung aufgrund des Relaxationsverhaltens des aus Kunststoff bestehenden dritten Bauteils 7 bereitstellt.

Weiterhin umfasst die Befestigungsanordnung 1 eine Aufnahmeöffnung 40 des zweiten Bauteils 5. In der dargestellten Ausführungsform wird die Aufnahmeöffnung 40 durch ein separates drittes Bauteil 7 bereitgestellt. Aus diesem Grund verfügt das zweite Bauteil 5 am Bauteilrand über eine Aussparung in Form eines Rechtecks mit einander gegenüberliegend angeordneten zurückspringenden Bereichen. Das dritte Bauteil 7 weist eine umlaufende Nut auf, deren Höhe einer Dicke des zweiten Bauteils 5 entspricht. Zudem sind zwei federnde Elemente 46 vorgesehen, die in die zurückspringenden Bereiche des zweiten Bauteils 5 eingreifen und ein Bewegen des dritten Bauteils 7 entgegen einer Einsetzrichtung des dritten Bauteils 7 in das zweite Bauteil 5 erschweren oder verhindern. Dies ist in Figur 8 erkennbar.

Bei einem Einsetzen des dritten Bauteils 7 mit der Aufnahmeöffnung 40 in das zweite Bauteil 5 federn daher die federnden Elemente 46 zunächst aufeinander zu, um anschließend bei Erreichen der zurückspringenden Bereiche des zweiten Bauteils 5 nach außen zu federn und dort einzurasten. Aufgrund der Nut im dritten Bauteil 7 ist eine Bewegung des dritten Bauteils 7 senkrecht zu einer Oberfläche des zweiten Bauteils 5 beschränkt oder verhindert. Aufgrund der Bereitstellung der Aufnahmeöffnung 40 in dem separaten dritten Bauteil 7 kann, wenn die Verbindung später gelöst und neu hergestellt werden muss, ein neues drittes Bauteil 7 verwendet werden. Gerade hierdurch ist es realisierbar, dass die Verbindung zwischen Befestigungselement 10 und Aufnahmeöffnung 40 wieder die ursprüngliche Verlässlichkeit aufweist.

Nun wieder auf die Aufnahmeöffnung 40 bezugnehmend weist diese in umfänglicher Richtung im Wechsel radial in die Aufnahmeöffnung 40 vorspringende 42 und zurückspringende Bereiche 44 auf. Die Funktionsweise des Zusammenwirkens zwischen der Aufnahmeöffnung 40 und dem Befestigungselement 10 wird nachfolgend anhand der Herstellung der Verbindung zwischen dem ersten 3 und dem zweiten Bauteil 5 erläutert.

Nachdem das erste Bauteil 3 und das zweite Bauteil 5 in den gewünschten Abstand zueinander angeordnet wurden, wird das Befestigungselement 10 durch die Bauteilöffnung im ersten Bauteil 3 eingesetzt. Da die Bauteilöffnung im ersten Bauteil 3 eine Form komplementär zu der Ausgestaltung mit den zweiten Vorsprüngen 34 aufweist, können die zweiten Vorsprünge 34 durch das Bauteil 3 treten, während die ersten Vorsprünge 32 an der Bauteiloberfläche aufliegen.

Zudem ist die Aufnahmeöffnung 40 so angeordnet, dass der Einsetzabschnitt 18 des Befestigungselements 10 mit dem vorspringenden Bereich 42 der Aufnahmeöffnung 40 und der Befestigungsabschnitt 14 mit dem zurückspringenden Bereich 44 ausgerichtet ist. Somit ist das Befestigungselement 10 in der Aufnahmeöffnung 40 in axialer Richtung geführt.

Sobald die ersten Vorsprünge 32 an der Bauteiloberfläche des ersten Bauteils 3 aufliegen, kann die Position in axialer Richtung durch ein Drehen des Befestigungselements 10 fixiert werden. Hierzu weist das Befestigungselement 10 im Kopfbereich 30 ein Antriebsmerkmal auf. In der dargestellten Ausführungsform handelt es sich um ein inneres Antriebsmerkmal in Form eines Innensechskants. Aufgrund des Versatzes zwischen den Vorsprüngen um 120°, wie oben erläutert, erfolgt ein Drehen vorzugsweise in einem Winkelbereich zwischen 30° und 60°. In der Ausführungsform mit den drei ersten 32 und drei zweiten Vorsprüngen 34 erfolgt das Drehen vorzugsweise um genau 60°.

Durch das Drehen des Befestigungselements 10 werden die Zähne 16 im Befestigungsabschnitt 14 in Eingriff mit den vorspringenden Bereichen 42 der Aufnahmeöffnung 40 gebracht. Hierbei graben sich die Zähne 16 vorzugsweise in das Material der vorspringenden Bereiche 42 bzw. der Aufnahmeöffnung 40 ein.

Um hierdurch eine sichere Befestigung des Befestigungselements 10 in der Aufnahmeöffnung 40 zu realisieren, besteht das Befestigungselement 10 aus einem Material, das härter ist als das Material, in dem die Aufnahmeöffnung 40 ausgebildet ist. Beispielhaft besteht das Befestigungselement 10 aus PPA-GF50. Hieraus ergibt sich der Vorteil, dass das Befestigungselement 10 bzw. die Zähne 16 des Befestigungselements 10 sich optimal in die vorspringenden Bereiche 42 der Aufnahmeöffnung 40 eingraben können.

Nachdem die Verbindung zwischen dem ersten 3 und dem zweiten Bauteil 5 auf diese Weise hergestellt wurde, ist vorzugsweise kein weiteres Befestigungselement, wie eine Befestigungsschraube oder dergleichen, an dieser Verbindungsstelle erforderlich, um die beiden Bauteile sicher aneinander zu befestigen.

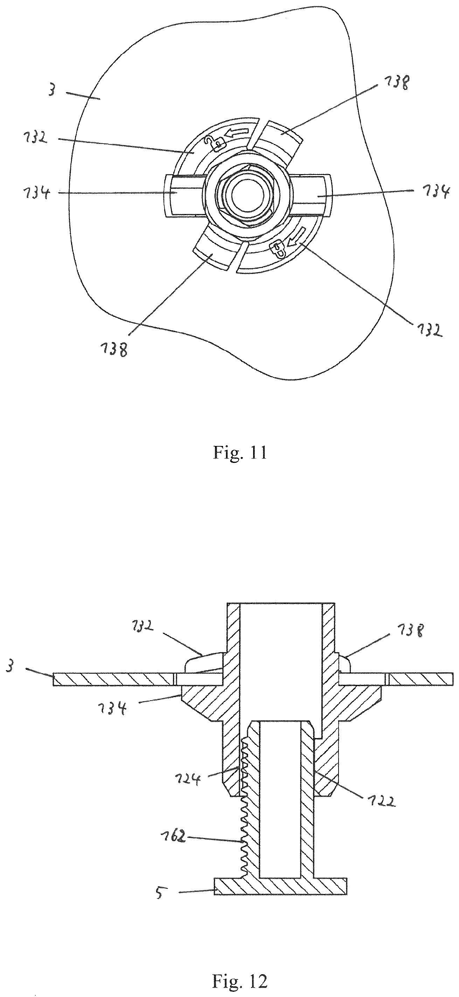

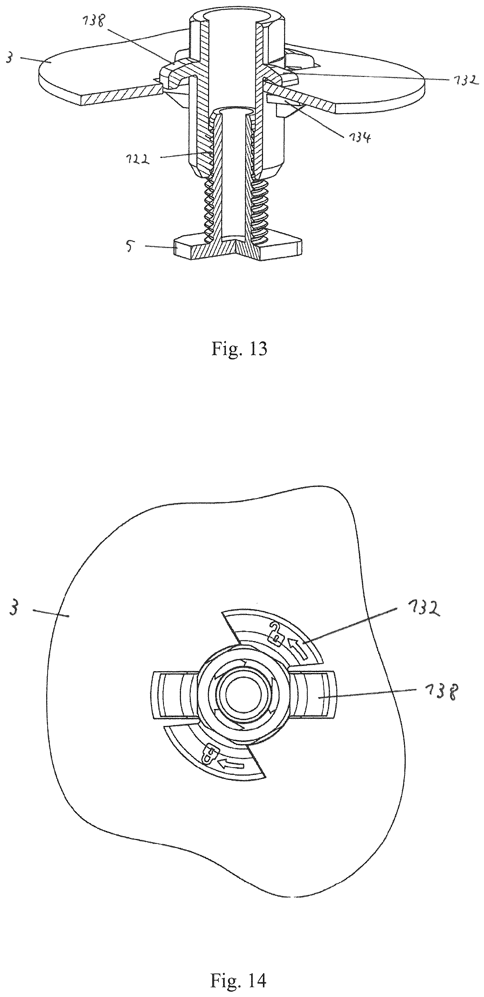

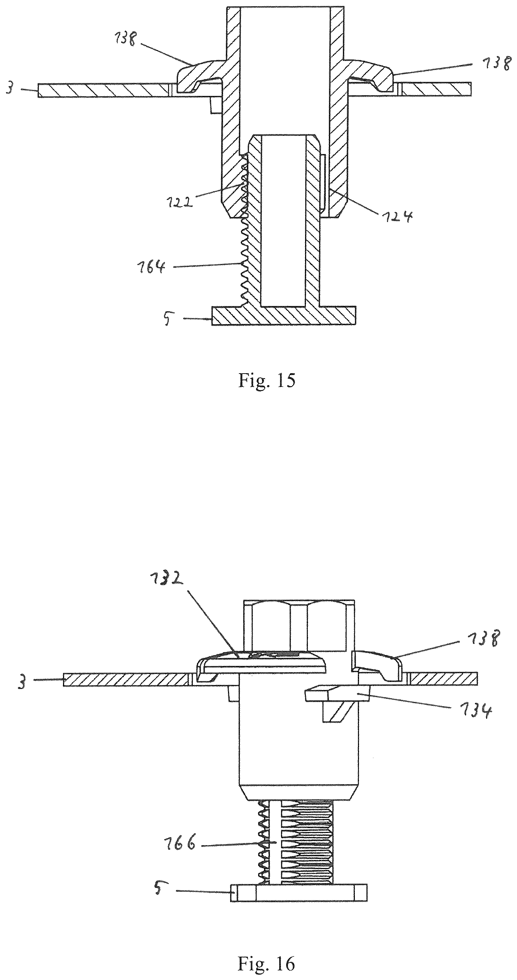

Nun bezugnehmend auf die Figuren 10 bis 16 ist eine Ausführungsform gemäß einer zweiten Alternative einer erfindungsgemäßen Befestigungsanordnung 100 gezeigt. Gleiche Bauteile werden hierbei mit gleichen Bezugszeichen bezeichnet.

Die Befestigungsanordnung 100 besteht aus einem Befestigungselement 110 mit einem Kopfbereich 130 und einem Schaftbereich 112. Der Kopfbereich 130 weist in bekannter Weise eine Vielzahl erster 132 und zweiter Vorsprünge 134 auf. In der dargestellten Ausführungsform sind zwei zweite Vorsprünge 134 und zwei erste Vorsprünge 132 vorhanden. Diese sind bezogen aufeinander um 180° versetzt angeordnet.

Anstelle der in der vorherigen Ausführungsform radial außen vorgesehenen Befestigungsabschnitte 14 und Einsetzabschnitte 18 sind in dem Schaftbereich 112 vorspringende 122 und zurückspringenden Bereiche 124 auf der radialen Innenseite vorgesehen. Diese befanden sich in der vorherigen Ausführungsform in der Aufnahmeöffnung 40.

Anstelle der Aufnahmeöffnung 40 ist daher in dieser Ausgestaltung ein Sicherungselement 160 vorgesehen. Dieses stellt einen sich senkrecht von der Oberfläche des zweiten Bauteils 7 vorstehenden Vorsprung bereit, der an seiner radialen Außenseite die Befestigungsabschnitte 162 mit den Zähnen 164 sowie die Einsetzabschnitte 166 aufweist.

Das Sicherungselement 160 ist entweder integraler Bestandteil des zweiten Bauteils 5 oder als separates drittes Bauteil bereitgestellt, das am zweiten Bauteil 5 befestigt ist. Die sich ergebende Funktionsweise gleicht der oben erläuterten, sodass auf diese Ausführungen entsprechend verwiesen wird.

Ebenso gelten die obigen Ausführungen für die Befestigungsabschnitte 14 mit den Zähnen 16 analog für die Befestigungsabschnitte 162 mit den Zähnen 164.

Die Bauteilöffnung im ersten Bauteil 3 ist komplementär zu den zweiten Vorsprüngen 134 ausgebildet. Dementsprechend wird das Befestigungselement 110 in das erste Bauteil 3 eingesetzt, bis die ersten Vorsprünge 132 auf der Bauteiloberfläche aufliegen.

Im Unterschied zu der vorherigen Ausführungsform sind zudem benachbart zu den ersten Vorsprüngen 132 zwei dritte Vorsprünge 138 vorgesehen. Diese sind bezogen aufeinander ebenfalls um 180° versetzt zueinander angeordnet und sind in Festdrehrichtung vor den ersten Vorsprüngen 132 angeordnet. Nach einem Drehen des Befestigungselements 110 in Festdrehrichtung rasten die dritten Vorsprünge 138 in die Bauteilöffnung ein, wodurch eine Rückdrehsicherung sowie eine Sicherung gegen Überdrehen geschaffen werden. Ein Drehen erfolgt in dieser Ausführungsform vorzugsweise um 45°.

Im Übrigen ist die Befestigungsanordnung 100 analog zu der vorherigen Befestigungsanordnung 1 aufgebaut, so dass sich die Funktionsweise aus den obigen Ausführungen ergibt und, um Wiederholungen zu vermeiden, nicht erneut wiedergegeben wird.

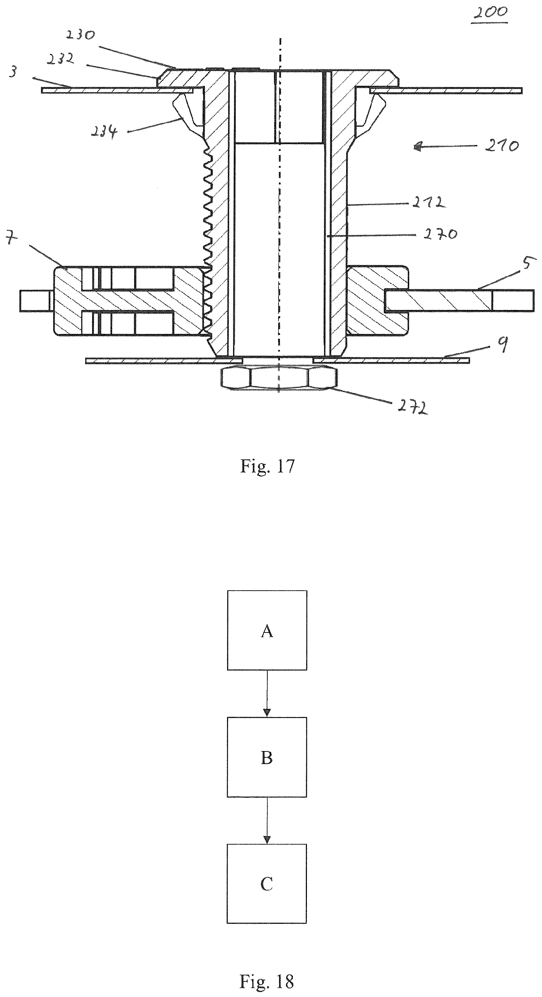

In Figur 17 ist eine perspektivische Ansicht einer Bauteilstruktur mit einer anderen Ausführungsform der ersten Alternative einer erfindungsgemäßen Befestigungsanordnung 200 im Schnitt in einem nicht befestigten Zustand gezeigt. Auch die Befestigungsanordnung 200 besteht aus einem hohlzylinderförmigen Befestigungselement 210 sowie einer Aufnahmeöffnung 40 des zweiten Bauteils 5.

Das Befestigungselement 210 umfasst einen Schaftbereich 212 und einen Kopfbereich 230. Im Unterscheid zu dem Kopfbereich 30 des Befestigungselements 10 weist der Kopfbereich 230 des Befestigungselements 210 einen umlaufenden Flansch 232 sowie eine Vielzahl zweiter Vorsprünge 234, vorzugsweise eine Vielzahl Rastnasen auf, die radial nach außen über den Schaftbereich 212 vorstehen. Beispielsweise sind vier Rastnasen vorhanden, die umfänglich gleichmäßig verteilt angeordnet sind.

Die zweiten Vorsprünge 234 sind axial von dem umlaufenden Flansch 232 in Richtung des Schaftendes beabstandet. Ein Abstand in axialer Richtung zwischen dem umlaufenden Flansch 232 und den zweiten Vorsprüngen 234 entspricht vorzugsweise einer Dicke des ersten Bauteils 3 im Befestigungsbereich.

Eine Bauteilöffnung im ersten Bauteil 3 weist eine zylindrische Form auf. Auf diese Weise kann das Befestigungselement 210 in die Bauteilöffnung des ersten Bauteils 3 eingesetzt werden, bis der umlaufende Flansch 232 auf der Oberfläche des ersten Bauteils 3 benachbart zur Bauteilöffnung aufliegt. Die zweiten Vorsprünge 234, insbesondere die Rastnasen, federn nach dem Einsetzen radial nach außen und fixieren das erste Bauteil 3 zwischen dem umlaufenden Flansch 232 und der Vielzahl zweiter Vorsprünge 234.

Wie bei dem Befestigungselement 10 besteht auch bei dem Befestigungselement 210 der Schaftbereich 212 in umfänglicher Richtung wechselweise aus einem Befestigungsabschnitt und einem Einsetzabschnitt. Bezogen auf den Befestigungsabschnitt ist der Einsetzabschnitt radial nach innen versetzt und vorzugsweise glatt ausgebildet. Auch hier sind die Befestigungsabschnitte in axialer Richtung vorzugsweise mit den zweiten Vorsprüngen 234 ausgerichtet, während die Einsetzabschnitte dazwischen angeordnet sind. In umfänglicher Richtung haben beispielsweise jeder Befestigungsabschnitt und jeder Einsetzabschnitt dieselbe Erstreckung.

Im Hinblick auf die weitere Ausgestaltung des Einsetzabschnittes, des Befestigungsabschnitts aber auch der Aufnahmeöffnung 40 wird auf die obigen Ausführungen zu den Figuren 1 bis 8 verwiesen.

Bei Verwendung des Befestigungselements 210 werden zunächst das erste Bauteil 3 und das zweite Bauteil 5 in dem gewünschten Abstand zueinander angeordnet und dann das Befestigungselement 210 durch die Bauteilöffnung im ersten Bauteil 3 eingesetzt. In dieser Ausführungsform ist die Bauteilöffnung vorzugsweise zylindrisch ausgebildet. Nachdem das Befestigungselement 210 in die Bauteilöffnung im ersten Bauteil 3 eingesetzt wurde, ist das erste Bauteil 3 zwischen dem umlaufenden Flansch 232 und den zweiten Vorsprüngen 234, insbesondere den Rastnasen, fixiert.

Die Aufnahmeöffnung 40 ist dabei so angeordnet, dass der Einsetzabschnitt des Befestigungselements 210 mit dem vorspringenden Bereich der Aufnahmeöffnung 40 und der Befestigungsabschnitt mit dem zurückspringenden Bereich ausgerichtet ist. Somit ist das Befestigungselement 210 in der Aufnahmeöffnung 40 in axialer Richtung geführt.

Sobald der umlaufende Flansch 232 an der Bauteiloberfläche des ersten Bauteils 3 aufliegt, kann die Position in axialer Richtung durch ein Drehen des Befestigungselements 210 fixiert werden. Hierzu weist das Befestigungselement 210 im Kopfbereich 230 ein Antriebsmerkmal auf. Dieses kann, wie oben diskutiert, als inneres oder als äußeres Antriebsmerkmal ausgebildet sein. In der dargestellten Ausführungsform handelt es sich um ein inneres Antriebsmerkmal, beispielsweise in Form eines Innensechskants.

Durch das Drehen des Befestigungselements 210 werden die Zähne im Befestigungsabschnitt in Eingriff mit den vorspringenden Bereichen der Aufnahmeöffnung gebracht. Hierbei graben sich die Zähne vorzugsweise in das Material der vorspringenden Bereiche bzw. der Aufnahmeöffnung ein. Aus diesem Grund besteht das Befestigungselement 210 aus einem Material, das härter ist als das Material, in dem die Aufnahmeöffnung 40 ausgebildet ist. Beispielhaft besteht das Befestigungselement 210 wie das Befestigungselement 10 aus PPA-GF50.

Nachdem die Verbindung zwischen dem ersten 3 und dem zweiten Bauteil 5 auf diese Weise hergestellt wurde, ist vorzugsweise kein weiteres Befestigungselement, wie eine Befestigungsschraube oder dergleichen, an dieser Verbindungsstelle erforderlich, um die beiden Bauteile sicher aneinander zu befestigen.

Als Variante kann, wie in Figur 17 dargestellt, noch ein viertes Bauteil 9 benachbart zum kopfabgewandten Ende des Schaftbereichs 212 vorgesehen sein. Das vierte Bauteil 9 weist zu diesem Zweck eine Mutter 272 auf, in der eine nicht dargestellte Befestigungsschraube eingeschraubt werden kann. Die Mutter 272 kann integraler Bestandteil des vierten Bauteils 9 sein oder ein eigenes Element, das fest mit dem vierten Bauteil 9 verbunden ist.

Um eine Komprimierung des Befestigungselements 210 zu begrenzen, ist zusätzlich im Inneren des Befestigungselements 210 eine entsprechende Hülse 270 vorgesehen. Alternativ zu der Hülse 270 können auch andere Elemente verwendet werden, die eine entsprechende Versteifung des Befestigungselements 210 bewirken.

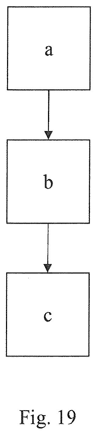

Nun bezugnehmend auf die Figuren 18 und 19 werden die jeweiligen Befestigungsverfahren erläutert.

In dem Befestigungsverfahren gemäß Figur 18 wird eine Ausführungsform der ersten Alternative der erfindungsgemäßen Befestigungsanordnung 1; 200 verwendet. Dabei wird in einem ersten Schritt A das erste Bauteil 3 in einem gewünschten Abstand zum zweiten Bauteil 5 angeordnet, wobei die Bauteilöffnung des ersten Bauteils 3 mit der Aufnahmeöffnung 40 des zweiten Bauteils 5 ausgerichtet ist. Nun erfolgt in Schritt B ein Einsetzen des Befestigungselements 10; 210 in die Bauteilöffnung des ersten Bauteils 3 bis der umlaufende Flansch 232 oder die Vielzahl erster Vorsprünge 32 am ersten Bauteil 3 anliegt und der Schaftbereich 12; 212 mit der Aufnahmeöffnung 40 des zweiten Bauteils 5 in Eingriff gelangt. Dabei sind die Einsetzabschnitte 18 mit den vorspringenden Bereichen 42 und die Befestigungsabschnitte 14 mit den zurückspringenden Bereichen 44 ausgerichtet. In Schritt C wird das Befestigungselement 1 gedreht, wodurch eine Fixierung des ersten Bauteils 3 am zweiten Bauteil 5 in axialer Richtung bewirkt wird.

Bei Verwendung der Ausführungsform des Befestigungselements mit dem umlaufenden Flansch 232 und der Vielzahl zweiter Vorsprünge 234, vorzugsweise einer Vielzahl Rastnasen, bewirkt bereits das Einsetzen des Befestigungselements 210 in die Bauteilöffnung des ersten Bauteils 3 eine Fixierung des ersten Bauteils 3 zwischen dem umlaufenden Flansch 232 und der Vielzahl zweiter Vorsprünge 234.

Wird die Ausführungsform des Befestigungselements 10 mit der Vielzahl erster 32 und zweiter Vorsprünge 34 verwendet, dann bewirkt das Drehen nach dem Einsetzen des Befestigungselements 10 in die Bauteilöffnung im ersten Bauteil 3 nicht nur eine Fixierung des ersten Bauteils 3 am zweiten Bauteil 5 in axialer Richtung, sondern zusätzlich eine Fixierung des ersten Bauteils 3 zwischen der Vielzahl erster 32 und zweiter Vorsprünge 34.

Das Befestigungsverfahren gemäß Figur 19 weist eine analoge Funktionsweise auf, wobei hier eine Ausführungsform der zweiten Alternative der erfindungsgemäßen Befestigungsanordnung 100 Verwendung findet. Auch hier wird in einem ersten Schritt a das erste Bauteil 3 in einem gewünschten Abstand zum zweiten Bauteil 5 angeordnet, wobei die Bauteilöffnung des ersten Bauteils 3 mit dem Sicherungselement 160 ausgerichtet ist. Nun wird in Schritt b das Befestigungselement 110 in die Bauteilöffnung des ersten Bauteils 3 eingesetzt, bis die Vielzahl erster Vorsprünge 132 am ersten Bauteil 3 anliegt und der Schaftbereich 112 mit dem Sicherungselement 160 in Eingriff gelangt. Dabei sind die vorspringenden Bereiche 122 mit den Einsetzabschnitten 166 des Sicherungselements 160 und die zurückspringenden Bereiche 124 mit den Befestigungsabschnitten 162 des Sicherungselements 160 ausgerichtet sind. Schließlich erfolgt in Schritt c ein Drehen des Befestigungselements 110, wodurch eine Fixierung des ersten Bauteils 3 zwischen der Vielzahl erster 132 und zweiter Vorsprünge 134 sowie eine Fixierung des ersten Bauteils 3 am zweiten Bauteil 5 in axialer Richtung bewirkt wird.

### 6. Bezugszeichenliste

- 1: Befestigungsanordnung
- 3: erstes Bauteil
- 5: zweites Bauteil
- 7: drittes Bauteil
- 9: viertes Bauteil

- 10: Befestigungselement
- 12: Schaftbereich
- 14: Befestigungsabschnitt
- 16: Zähne
- 18: Einsetzabschnitt
- 20: Steg

- 30: Kopfbereich
- 32: erster Vorsprung
- 34: zweiter Vorsprung
- 36: Rippe

- 40: Aufnahmeöffnung
- 42: vorspringender Bereich
- 44: zurückspringender Bereich
- 46: federndes Element

- 50: Befestigungselement

- 100: Befestigungsanordnung
- 110: Befestigungselement
- 112: Schaftbereich
- 122: vorspringender Bereich
- 124: zurückspringender Bereich

- 130: Kopfbereich
- 132: erster Vorsprung
- 134: zweiter Vorsprung
- 138: dritter Vorsprung

- 160: Sicherungselement
- 162: Befestigungsabschnitt
- 164: Zähne
- 166: Einsetzabschnitt

- 200: Befestigungsanordnung
- 210: Befestigungselement
- 212: Schaftbereich

- 230: Kopfbereich
- 232: umlaufender Flansch
- 234: zweiter Vorsprung

- 270: Hülse
- 272: Mutter

## Patentansprüche

1. Eine Befestigungsanordnung (1; 200) zur Befestigung eines ersten Bauteils (3) mit einer Bauteilöffnung an einem zweiten Bauteil (5) mit manuellem Ausgleich eines Abstands dazwischen, wobei die Befestigungsanordnung (1; 200) umfasst:
a. ein hohlzylinderförmiges Befestigungselement (10; 50; 210) mit einem Schaftbereich (12; 212) und einem Kopfbereich (30; 230), wobei
a1. der Kopfbereich (30; 230) radial nach außen über den Schaftbereich (12; 212) mit einem umlaufenden Flansch (232) oder einer Vielzahl erster Vorsprünge (32) und einer Vielzahl zweiter Vorsprünge (34; 234) vorsteht, wobei der umlaufende Flansch (232) oder die Vielzahl erster Vorsprünge (32) und die Vielzahl zweiter Vorsprünge (34) in axialer Richtung voneinander beabstandet angeordnet sind, so dass ein Rand der Bauteilöffnung im ersten Bauteil (3) zwischen dem umlaufenden Flansch (232) oder der Vielzahl erster Vorsprünge (32) und der Vielzahl zweiter Vorsprünge (34; 234) anordenbar ist und
a2. der Schaftbereich (12; 212) an seiner radialen Außenseite eine Vielzahl von Befestigungsabschnitten (14) und eine Vielzahl von Einsetzabschnitten (18) aufweist, die in umfänglicher Richtung jeweils im Wechsel angeordnet sind und sich in axialer Richtung zwischen Kopfbereich (30; 230) und einem axialen Ende des Schaftbereichs (12; 212) erstrecken, wobei die Befestigungsabschnitte (14) in radialer Richtung über die Einsetzabschnitte (18) hinausragen,
b. eine Aufnahmeöffnung (40) des zweiten Bauteils (5), die in Umfangsrichtung im Wechsel radial in die Aufnahmeöffnung (40) vorspringende (42) und zurückspringende Bereiche (44) aufweist, so dass
c. das Befestigungselement (10; 50; 210) durch die Bauteilöffnung im ersten Bauteil (3) in die Aufnahmeöffnung (40) einsteckbar ist und relativ zu der Aufnahmeöffnung (40) drehbar ist, wobei eine Fixierung des ersten Bauteils (3) zwischen dem umlaufenden Flansch (232) und der Vielzahl zweiter Vorsprünge (234) durch Einstecken des Befestigungselements (210) oder zwischen der Vielzahl erster (32) und zweiter Vorsprünge (34) durch Drehen des Befestigungselements (10; 50) sowie eine Fixierung des ersten Bauteils (3) am zweiten Bauteil (5) in axialer Richtung durch Drehen des Befestigungselements (10; 50; 210) bewirkt wird.

2. Eine Befestigungsanordnung (100) zur Befestigung eines ersten Bauteils (3) mit einer Bauteilöffnung an einem zweiten Bauteil (5) mit manuellem Ausgleich eines Abstands dazwischen, wobei die Befestigungsanordnung (100) umfasst:
a. ein hohlzylinderförmiges Befestigungselement (110) mit einem Schaftbereich (112) und einem Kopfbereich (130), wobei
a1. der Kopfbereich (130) radial nach außen über den Schaftbereich (112) mit einer Vielzahl erster (132) und zweiter Vorsprünge (134) vorsteht, wobei die Vielzahl erster (132) und zweiter Vorsprünge (134) in axialer Richtung voneinander beabstandet und in umfänglicher Richtung versetzt zueinander angeordnet sind, so dass ein Rand der Bauteilöffnung im ersten Bauteil (3) zwischen der Vielzahl erster (132) und zweiter Vorsprünge (134) anordenbar ist und
a2. der Schaftbereich (112) an seiner radialen Innenseite in Umfangsrichtung im Wechsel radial in einen Innenraum vorspringende (122) und zurückspringende Bereiche (124) aufweist,
b. ein Sicherungselement (160), das einen sich senkrecht von einer Oberfläche des zweiten Bauteils (5) erstreckenden Vorsprung bereitstellt, wobei der Vorsprung an seiner radialen Außenseite eine Vielzahl von Befestigungsabschnitten (162) und eine Vielzahl von Einsetzabschnitten (166) aufweist, die in umfänglicher Richtung jeweils im Wechsel angeordnet sind und sich in axialer Richtung zwischen dem zweiten Bauteil (5) und einem axialen Ende des Sicherungselements (160) erstrecken, wobei die Befestigungsabschnitte (162) in radialer Richtung weiter vorstehen als die Einsetzabschnitte (166), so dass
c. das Befestigungselement (110) durch eine Bauteilöffnung im ersten Bauteil (3) auf das Sicherungselement (160) steckbar und relativ zu dem Sicherungselement (160) drehbar ist, wobei eine Drehung des Befestigungselements (110) eine Fixierung des ersten Bauteils (3) zwischen der Vielzahl erster (132) und zweiter Vorsprünge (134) sowie eine Fixierung des ersten Bauteils (3) am zweiten Bauteil (5) in axialer Richtung bewirkt.

3. Die Befestigungsanordnung (1; 200) gemäß einem der vorhergehenden Patentansprüche 1 oder 2, wobei mindestens ein Einsetzabschnitt (18) benachbart zu einem Befestigungsabschnitt (14) einen axial verlaufenden Steg (20) aufweist, der radial von dem Einsetzabschnitt (18) vorsteht und einen Anschlag zur Begrenzung der Drehung des Befestigungselements (10) für den entsprechenden vorspringenden Bereich (42) bereitstellt.

4. Die Befestigungsanordnung (1; 100; 200) gemäß einem der vorhergehenden Patentansprüche, wobei jeder Befestigungsabschnitt (14; 162) eine Vielzahl von Zähnen (16; 164) aufweist.

5. Die Befestigungsanordnung (1; 100; 200) gemäß Patentanspruch 4, wobei sich die Zähne (16; 164) in Festdrehrichtung des Befestigungselements (10; 110) verjüngen und/oder sich ihre radiale Erstreckung reduziert.

6. Die Befestigungsanordnung (1; 100; 200) gemäß einem der Patentansprüche 4 oder 5, wobei
a. die Zähne (16; 164) senkrecht zu einer durch den Schaftbereich (12; 212) des Befestigungselements (10; 210) definierten Längsachse oder senkrecht zu einer durch den Vorsprung des Sicherungselements (160) definierten Längsachse verlaufen oder
b. zwei benachbarte Zähne (16; 164) spiegelsymmetrisch bezogen auf eine Ebene zwischen den Zähnen (16; 164), die senkrecht zur Längsachse ausgerichtet ist, angeordnet sind, wobei die benachbarten Zähne (16; 164) einen Winkel von 1°, vorzugsweise 2° und besonders bevorzugt 3°, mit der Ebene einschließen.

7. Die Befestigungsanordnung (1; 100; 200) gemäß einem der vorhergehenden Patentansprüche, wobei das Befestigungselement (10; 50; 110; 210) im Kopfbereich (30; 130; 230) ein Antriebsmerkmal aufweist.

8. Die Befestigungsanordnung (1; 100; 200) gemäß einem der vorhergehenden Patentansprüche, wobei der umlaufende Flansch (232) oder die Vielzahl erster Vorsprünge (32; 132) benachbart zu einem ersten axialen Ende des Befestigungselements (10; 50; 110; 210) vorhanden ist und die Vielzahl zweiter Vorsprünge (34; 134; 234) weist auf einer dem umlaufenden Flansch (232) oder der Vielzahl erster Vorsprünge (32; 132) zugewandten Fläche mindestens eine Rippe (36) auf.

9. Die Befestigungsanordnung (1; 200) gemäß einem der vorhergehenden Patentansprüche in Verbindung mit Patentanspruch 1, wobei das Befestigungselement (10; 50; 210) aus einem Material besteht, das härter ist als das Material, in dem die Aufnahmeöffnung (40) ausgebildet ist.

10. Die Befestigungsanordnung (100) gemäß einem der vorhergehenden Patentansprüche in Verbindung mit Patentanspruch 2, wobei das Sicherungselement (160) aus einem Material besteht, das härter ist als das Material des Befestigungselements (110).

11. Eine Bauteilstruktur bestehend aus einem ersten Bauteil (3) mit Bauteilöffnung und einem zweiten Bauteil (5), wobei das erste (3) und das zweite Bauteil (5) mit einem Abstand zueinander mittels der Befestigungsanordnung (1; 100; 200) gemäß einem der vorhergehenden Patentansprüche miteinander verbunden sind.

12. Die Bauteilstruktur gemäß Patentanspruch 11, wobei die Befestigungsanordnung (1; 200) eine Befestigungsanordnung (1; 200) in Verbindung mit Patentanspruch 1 ist und die Aufnahmeöffnung (40) ist integraler Bestandteil des zweiten Bauteils (5) oder eines separaten dritten Bauteils (7), das an dem zweiten Bauteil (5) angeordnet ist, vorzugsweise auf einen Rand des zweiten Bauteils (5) seitlich aufgeschoben und/oder in dem zweiten Bauteil (5) verliersicher befestigt ist.

13. Die Bauteilstruktur gemäß Patentanspruch 11, wobei die Befestigungsanordnung (100) eine Befestigungsanordnung (100) in Verbindung mit Patentanspruch 2 ist und das Sicherungselement (160) ist integraler Bestandteil des zweiten Bauteils (5) oder ein separates drittes Bauteil (7), das an dem zweiten Bauteil (5) befestigt ist.

14. Ein Befestigungsverfahren zum Befestigen eines ersten Bauteils (3) mit einer Bauteilöffnung an einem zweiten Bauteil (5) unter Verwendung einer Befestigungsanordnung (1; 200) gemäß einem der Patentansprüche 1 oder 3 bis 10 in Verbindung mit Patentanspruch 1, wobei das Verfahren die Schritte aufweist:
a. Anordnen (Schritt A) des ersten Bauteils (3) in einem gewünschten Abstand zum zweiten Bauteil (5), wobei die Bauteilöffnung des ersten Bauteils (3) mit der Aufnahmeöffnung (40) des zweiten Bauteils (5) ausgerichtet ist,
b. Einsetzen (Schritt B) des Befestigungselements (10; 50; 210) in die Bauteilöffnung des ersten Bauteils (3), bis der umlaufende Flansch (232) oder die Vielzahl erster Vorsprünge (32) am ersten Bauteil (3) anliegt und der Schaftbereich (12; 212) mit der Aufnahmeöffnung (40) des zweiten Bauteils (5) in Eingriff gelangt, wobei die Einsetzabschnitte (18) mit den vorspringenden Bereichen (42) und die Befestigungsabschnitte (14) mit den zurückspringenden Bereichen (44) ausgerichtet sind, danach
c. Drehen des Befestigungselements (10; 50; 210), wodurch eine Fixierung des ersten Bauteils (3) am zweiten Bauteil (5) in axialer Richtung bewirkt wird.

15. Ein Befestigungsverfahren zum Befestigen eines ersten Bauteils (3) mit einer Bauteilöffnung an einem zweiten Bauteil (5) unter Verwendung einer Befestigungsanordnung (100) gemäß einem der Patentansprüche 2 oder 3 bis 10 in Verbindung mit Patentanspruch 2, wobei das Verfahren die Schritte aufweist:
a. Anordnen (Schritt a) des ersten Bauteils (3) in einem gewünschten Abstand zum zweiten Bauteil (5), wobei die Bauteilöffnung des ersten Bauteils (3) mit dem Sicherungselement (160) ausgerichtet ist,
b. Einsetzen (Schritt b) des Befestigungselements (110) in die Bauteilöffnung des ersten Bauteils (3), bis die Vielzahl erster Vorsprünge (132) am ersten Bauteil (3) anliegt und der Schaftbereich (112) mit dem Sicherungselement (160) in Eingriff gelangt, wobei die vorspringenden Bereiche (122) mit den Einsetzabschnitten (166) des Sicherungselements (160) und die zurückspringenden Bereiche (124) mit den Befestigungsabschnitten (162) des Sicherungselements (160) ausgerichtet sind, danach
c. Drehen (Schritt c) des Befestigungselements (100), wodurch eine Fixierung des ersten Bauteils (3) zwischen der Vielzahl erster (132) und zweiter Vorsprünge (134) sowie eine Fixierung des ersten Bauteils (3) am zweiten Bauteil (5) in axialer Richtung bewirkt wird.
